(19) Europäisches Patentamt
European Patent Office
Office européen des brevets

(11) **EP 1 919 055 A2**

(12) **EUROPÄISCHE PATENTANMELDUNG**

(43) Veröffentlichungstag:
**07.05.2008 Patentblatt 2008/19**

(51) Int Cl.:
**H02J 3/18** $^{(2006.01)}$

(21) Anmeldenummer: **07020754.3**

(22) Anmeldetag: **24.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **02.11.2006 DE 102006051546**

(71) Anmelder: **Nordex Energy GmbH**
**22848 Norderstedt (DE)**

(72) Erfinder:
• **Woldmann, Thomas**
**21129 Hamburg (DE)**
• **Richter, Kay**
**22846 Norderstedt (DE)**

(74) Vertreter: **Hauck Patent- und Rechtsanwälte**
**Neuer Wall 41**
**20354 Hamburg (DE)**

(54) **Verfahren zum Betrieb einer Windenergieanlage mit einem doppelt gespeisten Asynchrongenerator sowie Windenergieanlage mit einem doppelt gespeisten Asynchrongenerator**

(57) Verfahren zum Betrieb einer Windenergieanlage mit einem doppelt gespeisten Asynchrongenerator, das einen Betriebsmodus als Phasenschieber aufweist, in dem Blindleistung in das elektrische Versorgungsnetz eingespeist wird, das Verfahren weist folgende Schritte auf:
- der Stator des Asynchrongenerators wird kurzgeschlossen,

- der Asynchrongenerator wird über einen Umrichter auf eine vorbestimmte Drehzahl aus einem Arbeits-Drehzahlbereich hochgefahren,
- nach dem Hochfahren wird der Kurzschluß im Stator aufgehoben,
- der doppelt gespeiste Asynchrongenerator wird mit dem elektrischen Versorgungsnetz synchronisiert und
- zur Erzeugung von Blindleistung angesteuert.

EP 1 919 055 A2

**Beschreibung**

Die vorliegende Erfindung betrifft ein Verfahren zum Betrieb einer Windenergieanlage mit einem doppelt gespeisten Asynchrongenerator, das einen Betriebsmodus als Phasenschieber aufweist. In diesem Betriebsmodus wird von der Windenergieanlage Blindleistung in das elektrische Versorgungsnetz eingespeist. Ebenfalls betrifft die Erfindung eine Windenergieanlage mit einem doppelt gespeisten Asynchrongenerator, die im besonderen Maße dafür geeignet ist, Blindleistung in das Netz einzuspeisen.

Bei einer Windenergieanlage mit einem doppelt gespeisten Asynchrongenerator ist der Stator direkt mit dem elektrischen Versorgungsnetz verbunden. Der Rotor ist über Schleifringe elektrisch mit einem Umrichter verbunden. Der Umrichter muß lediglich für die Schlupfleistung des Generators ausgelegt sein. Diese ist proportional zum Drehzahlschlupf s des Asynchrongenerators:

$$s = \frac{n_S - n_R}{n_S} \ ,$$

wobei $n_s$ die synchrone Generatordrehzahl und $n_R$ die maximale Generator-Arbeitsdrehzahl bedeutet.

Eine Windenergieanlage mit einem doppelt gespeisten Asynchrongenerator kann unter folgenden Bedingungen Blindleistung ins elektrische Versorgungsnetz einspeisen:

- beim normalen Wirkleistungsproduktionsbetrieb über einen Netzumrichter (Blindleistungsstützung) und
- im normalen Wirkleistungsproduktionsbetrieb über den Rotorumrichter sowie den Generator und/oder über den Netzumrichter.

Der Erfindung liegt die Aufgabe zugrunde, ein Verfahren zum Betrieb eines Drehstrom-Asynchrongenerators bereitzustellen und eine Windenergieanlage mit einem doppelt gespeisten Asynchrongenerator zu schaffen, die in besonders einfacher Weise die Produktion von Blindleistung erlaubt.

Erfindungsgemäß wird die Aufgabe durch ein Verfahren mit den Merkmalen aus Anspruch 1 und einer Windenergieanlage mit den Merkmalen aus Anspruch 12 gelöst. Vorteilhafte Ausgestaltungen bilden die Gegenstände der Unteransprüche.

Das erfindungsgemäße Verfahren sieht vor, den Stator des Asynchrongenerators kurzzuschließen. Hierbei ist selbstverständlich der Asynchrongenerator nicht mit dem elektrischen Versorgungsnetz verbunden. Der Asynchrongenerator wird in seinem kurzgeschlossenen Zustand über einen Umrichter auf eine vorbestimmte Drehzahl aus einem Arbeits-Drehzahlbereich hochgefahren. Um die Windenergieanlage in einen Betrieb als Phasenschieber einsetzen zu können, ist ein Arbeits-Drehzahlbereich definiert. Innerhalb dieses Arbeits-Drehzahlbereichs kann die Windenergieanlage als Phasenschieber eingesetzt werden. Während des Hochfahrens wird der Asynchrongenerator mit kurzgeschlossenem Stator über einen Umrichter angesteuert, um eine vorbestimmte Drehzahl aus dem Arbeits-Drehzahlbereich einzunehmen. Erfindungsgemäß wird nach dem Hochfahren der Kurzschluß in dem Stator aufgehoben und der Asynchrongenerator mit dem elektrischen Versorgungsnetz im Hinblick auf Spannung, Frequenz und Phasenlage synchronisiert sowie zur Erzeugung von Blindleistung angesteuert. Bei dem erfindungsgemäßen Verfahren kann auch ohne Windantrieb die Windenergieanlage als Phasenschieber und damit zur Stützung des elektrischen Versorgungsnetzes eingesetzt werden. In diesem Betriebsmodus wird der Asynchrongenerator auf die erforderliche Drehzahl hochgefahren. Im Phasenschieberbetrieb muß aus dem elektrischen Versorgungsnetz lediglich die Wirkleistung aus dem Versorgungsnetz entnommen werden, die zum Ausgleich des Eigenverbrauchs und der Verluste erforderlich ist. Dieser Anteil an entnommener Wirkleistung ist überaus gering im Vergleich zu der bereitgestellten Blindleistung.

In einer bevorzugten Ausgestaltung wird der Asynchrongenerator in einem Arbeits-Drehzahlbereich hochgefahren, der 50 bis 150 Prozent der Nenndrehzahl beträgt. Bevorzugt kann der Arbeits-Drehzahlbereich auch 70 Prozent bis 130 Prozent betragen. Allgemein wird die Auswahl der vorbestimmten Drehzahl dadurch bestimmt, daß bei höherer Drehzahl eine bessere Generatorkühlung gewährleistet wird. Je größer die Kühlleistung des Generators um so höher ist die Blindleistung, die dauerhaft erzeugt werden kann. Ferner ist zu berücksichtigen, daß nach dem Hochfahren und direkt vor einem Zuschalten in einen Netzparallelbetrieb der Generator nicht angetrieben wird. Es ist daher bei der Auswahl der vorbestimmten Drehzahl sicherzustellen, daß der Generator eine ausreichend hohe Drehzahl besitzt, um auch nach einem Zuschalten mit einer ausreichenden Drehzahl im Netzparallelbetrieb betrieben werden zu können. Bevorzugt wird dabei eine Drehzahl gewählt, die oberhalb der Synchrondrehzahl liegt.

In einer bevorzugten Ausgestaltung sind während des Phasenschieberbetriebs Getriebe und Asynchrongenerator voneinander entkoppelt. Hierdurch kann der Generator bei der Erzeugung der Blindleistung unabhängig von dem Getriebe bzw. dem Rotor drehen. Grundsätzlich ist es möglich, bei zeitlich begrenztem Phasenschieberbetrieb auch den gesamten Triebstrang mit Rotor und Flügeln zu beschleunigen und nachfolgend weiter zu betreiben. Bei dieser Ausgestaltung ist allerdings dann die aus dem Netz aufgenommene Wirkleistung deutlich größer als bei entkoppeltem Triebstrang, da nicht nur die am Generator anfallenden Verluste ausgeglichen, sondern auch die Verluste aus dem Triebstrang sowie aus dem Widerstand der Rotorblätter.

Bevorzugt wird nach dem Hochfahren des Asynchrongenerators auf die vorbestimmte Drehzahl der den kurzgeschlossenen Asynchrongenerator antreibende Umrichter ausgeschaltet und der Kurzschluß im Stator aufgehoben. Zweckmäßigerweise wird gewartet bis Stator- und Rotorfeld abgeklungen sind. In dieser Zeit nimmt die Drehzahl des Asynchrongenerators ab. Nachfolgend wird der Asynchrongenerator durch den Umrichter mit dem Netz synchronisiert. Ein Sollwert für die einzuspeisende Blindleistung wird den Umrichtern vorgegeben.

Die erfindungsgemäße Aufgabe wird ebenfalls durch eine Windenergieanlage mit einem doppelt gespeisten Asynchrongenerator gelöst, der ein Motorschütz aufweist, das den Stator des Generators kurzschließt. Mit dem kurzgeschlossenen Stator ist es dann möglich, den Asynchrongenerator durch eine rotorseitige Ansteuerung motorisch zu betreiben und auf eine vorbestimmte Drehzahl hochzufahren.

Zusätzlich zu dem erfindungsgemäßen Motorschütz ist bei der Windenergieanlage eine Statorzuschalteinrichtung, bevorzugt ein Statorschütz, vorgesehen, die den Stator mit einem Anschlußpunkt für die Windenergieanlage verbindet. In dem Anschlußpunkt ist ein Leistungsschalter vorgesehen, der die Windenergieanlage an das elektrische Versorgungsnetz, beispielsweise eine damit verbundene Umspannstation, anschließt.

Die erfindungsgemäße Windenergieanlage besitzt bevorzugt einen Rotorumrichter und einen Netzumrichter, über die der Rotor angesteuert wird. Bevorzugt ist eine Umrichtersteuerung vorgesehen, die den Rotorumrichter und den Netzumrichter ansteuert, wobei die Umrichtersteuerung von einem Park- oder Netzsteuerung-Regler einen Sollwert für die zu generierende Blindleistung empfängt.

Bevorzugt ist zwischen dem Generator und dem Getriebe eine Kupplung vorgesehen, um den Generator mechanisch vom Triebstrang zu trennen.

Eine bevorzugte Ausgestaltung der erfindungsgemäßen Windenergieanlage wird anhand eines Beispiels näher erläutert:

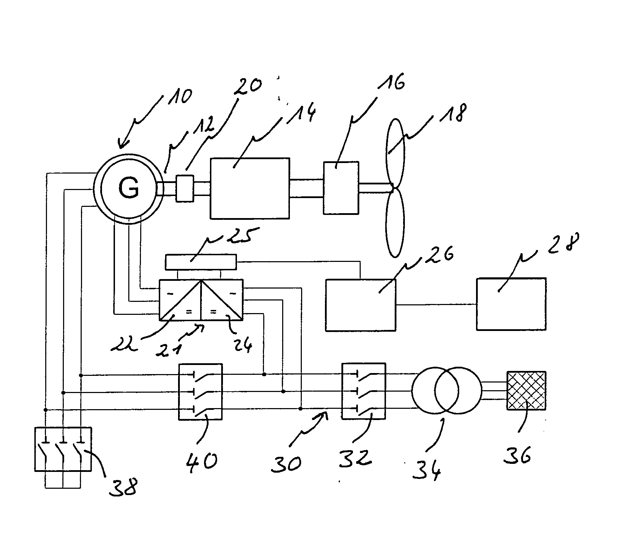

Die einzige Figur zeigt einen Asynchrongenerator 10, der über eine Welle 12 angetrieben wird. Das Drehmoment für die Welle 12 wird über einen Rotor 16 und die zugehörigen Rotorblätter 18 aus dem Wind aufgenommen und an ein Getriebe 14 weitergeleitet. Das Getriebe 14 kann - wie dargestellt - über eine Kupplung 20 mit der Eingangswelle für den Rotor des Generators gekoppelt sein.

Elektrisch ist der Rotor mit einem Rotorumrichter 22 verbunden, der über ein Gleichstromzwischenkreis (nicht dargestellt) mit einem Netzumrichter 24 gekoppelt ist. Beide Umrichter 22 und 24 werden über eine Umrichtersteuerung 25 und eine Windenergieanlagensteuerung 26, die Teil einer Gesamtsteuerung sein kann, angesteuert. Der Windenergieanlagensteuerung 26 werden in dem dargestellten Ausführungsbeispiel Sollwerte für die einzuspeisende Blindleistung von einer Park- oder Netzsteuerung 28 vorgelegt.

Der netzseitige Umrichter 24 ist mit Ausgangsleitungen 30 gekoppelt, die über einen Leistungsschalter 32 und ein MS-Trafo 34 mit dem elektrischen Versorgungsnetz 36 gekoppelt ist.

Statorseitig ist der Asynchrongenerator elektrisch mit einem Motorschütz 38 verbunden. Bei geschlossenem Motorschütz 38 sind die Wicklungen im Stator kurzgeschlossen. Ferner ist der Stator des Asynchrongenerators 10 über eine Statorzuschalteinrichtung 40 mit den Ausgangsleitungen 30 verbunden. Ist die Statorzuschalteinrichtung 40 geschlossen und das Motorschütz 38 geöffnet, so liegt am Stator die Netzspannung an, wenn auch der Leistungsschalter 32 geschlossen ist.

Im Phasenschieberbetrieb ist der Stator des Asynchrongenerators an das Netz angeschlossen und der Rotor wird über den Rotorumrichter 22 zur Erzeugung der geforderten Blindleistung angesteuert. Der Generator 10 wird dabei mit der notwendigen Wirkleistung über den Umrichter 22 aus dem Netz 34 versorgt. Bevorzugt ist bei dem Phasenschieberbetrieb das Getriebe 14 von der Generatorwelle über die Kupplung 20 zu entkoppeln, so daß die zur Aufrechterhaltung der Drehzahl notwendige Wirkleistung lediglich den Verlusten im Generator und Umrichter entspricht.

Um in den Phasenschieberbetrieb zu gelangen, wird bei dem erfindungsgemäßen Verfahren zunächst bei geöffneter Statorzuschalteinrichtung das Motorschütz 38 geschlossen. Hierdurch wird der Stator kurzgeschlossen und über aus dem Netz aufgenommene Leistung kann bei geschlossenem Leistungsschalter der Rotorumrichter 22 angesteuert werden, um eine Drehzahl im oder knapp über dem Arbeits-Drehzahlbereich zu erreichen, insbesondere verbleiben 15 Prozent der synchronen Generatordrehzahl beispielsweise als Regelreserve. In einem nachfolgenden Schritt wird der Rotorumrichter 22 ausgeschaltet und das Motorschütz 38 geöffnet. Nach Abklingen des Rotor- und Statorfeldes wird der Generator über den Rotorumrichter 22 neu magnetisiert. Der Umrichter synchronisiert den Generator mit dem Netz und schaltet den Generator über den Leistungsschalter 32 an das Netz. Das Motorschütz 38 wird lediglich zum Hochfahren eingesetzt, um in den Phasenschieberbetrieb wechseln zu können.

Durch elektrische und mechanische Verluste wird der Generator in dem Phasenschieberbetrieb abgebremst. Der Rotorumrichter 22 nimmt diese Leistung aus dem elektrischen Versorgungsnetz 36 auf und führt sie dem Generator 10 zu, um die Drehzahl letztendlich konstant zu halten.

**Patentansprüche**

1. Verfahren zum Betrieb einer Windenergieanlage mit einem doppelt gespeisten Asynchrongenerator (10), das einen Betriebsmodus als Phasenschieber aufweist, in dem Blindleistung in das elektrische Versorgungsnetz (36) eingespeist wird, das Verfahren weist folgende Schritte auf:

- der Stator des Asynchrongenerators wird kurzgeschlossen,
- der Asynchrongenerator wird über einen Umrichter (22, 24) auf eine vorbestimmte Drehzahl aus einem Arbeits-Drehzahlbereich hochgefahren,
- nach dem Hochfahren wird der Kurzschluß im Stator aufgehoben,
- der doppelt gespeiste Asynchrongenerator (10) wird mit dem elektrischen Versorgungsnetz synchronisiert und
- zur Erzeugung von Blindleistung angesteuert.

**2.** Verfahren nach Anspruch 1, **dadurch gekennzeichnet, daß** der Arbeits-Drehzahlbereich von 50 Prozent der Nenndrehzahl bis 150 Prozent der synchronen Generatordrehzahl sich erstreckt.

**3.** Verfahren nach Anspruch 1 oder 2, **dadurch gekennzeichnet, daß** der Arbeits-Drehzahlbereich von 70 Prozent der Nenndrehzahl bis 130 Prozent der synchronen Generatordrehzahl sich erstreckt.

**4.** Verfahren nach einem der Ansprüche 1 bis 3, **dadurch gekennzeichnet, daß** während des Phasenschieberbetriebes Getriebe (14) und Asynchrongenerator (10) voneinander entkoppelt sind.

**5.** Verfahren nach einem der Ansprüche 1 bis 4, **dadurch gekennzeichnet, daß** nach dem Hochfahren des Asynchrongenerators auf die vorbestimmte Drehzahl der den kurzgeschlossenen Asynchrongenerator antreibende Umrichter ausgeschaltet und der Kurzschluß im Stator aufgehoben wird.

**6.** Verfahren nach Anspruch 5, **dadurch gekennzeichnet, daß** abgewartet wird bis Stator- und Rotorfeld abgeklungen sind.

**7.** Verfahren nach Anspruch 6, **dadurch gekennzeichnet, daß** der Asynchrongenerator durch den Umrichter (22) neu magnetisiert wird.

**8.** Verfahren nach einem der Ansprüche 1 bis 7, **dadurch gekennzeichnet, daß** der Umrichter (22) den Generator synchronisiert.

**9.** Verfahren nach einem der Ansprüche 1 bis 8, **dadurch gekennzeichnet, daß** ein Sollwert für die einzuspeisende Blindleistung vorgegeben ist.

**10.** Verfahren nach einem der Ansprüche 1 bis 9, **dadurch gekennzeichnet, daß** die einzuspeisende Blindleistung über den generatorseitigen Umrichter (32) und den Generator (10) erzeugt wird.

**11.** Verfahren nach einem der Ansprüche 1 bis 9, **dadurch gekennzeichnet, daß** die einzuspeisende Blindleistung über den netzseitigen Umrichter (24) erzeugt wird.

**12.** Windenergieanlage mit einem doppelt gespeisten Asynchrongenerator, **dadurch gekennzeichnet, daß** ein Motorschütz (38) vorgesehen ist, um den Stator des Generators kurzzuschließen.

**13.** Windenergieanlage nach Anspruch 12, **dadurch gekennzeichnet, daß** eine Statorzuschalteinrichtung (40) vorgesehen ist, die den Stator mit einem Anschlußpunkt (30) für die Windenergieanlage verbindet.

**14.** Windenergieanlage nach Anspruch 13, **dadurch gekennzeichnet, daß** in dem Anschlußpunkt (30) ein Leistungsschalter (32) vorgesehen ist.

**15.** Windenergieanlage nach einem der Ansprüche 12 bis 14, **dadurch gekennzeichnet, daß** ein Kaskadenumrichter (21) aus Rotor- und Netzumrichter zum Betrieb des Generators vorgesehen ist.

**16.** Windenergieanlage nach Anspruch 15, **dadurch gekennzeichnet, daß** eine Umrichtersteuerung (25) vorgesehen ist, die Rotorumrichter (22) und Netzumrichter (24) ansteuert, wobei die Umrichtersteuerung (25) über eine Windenergieanlagensteuerung (26) von einem Park- oder Netzsteuerung-Regler (28) einen Sollwert für die zu generierende Blindleistung empfängt.

**17.** Windenergieanlage nach einem der Ansprüche 12 bis 16, **dadurch gekennzeichnet, daß** zwischen dem Generator (10) und dem Getriebe (14) eine Kupplung (20) vorgesehen ist.